# EUROPEAN PATENT APPLICATION

(11) **EP 3 483 522 A1**
(43) Date of publication of application: **15.05.2019**
(21) Application number: 17201677.6
(22) Date of filing: 14.11.2017
(51) Int. Cl.: F24S 30/48

(54) **ACTUATOR, MECHANISM COMPRISING THE ACTUATOR, SOLAR ENERGY HARNESSING APPARATUS, ARRANGEMENT OF BUILDINGS, AND A METHOD FOR MANUFACTURING THE ACTUATOR**

(71) Applicant: ETH Zurich, 8092 Zurich (CH)
(72) Inventor: SCHLÜTER, Arno, 8006 Zürich (CH); SVETOZAREVIC, Bratislav, 8049 Zürich (CH); BEGLE, Moritz, 8005 Zürich (CH); PRAGEETH, Jayathissa, 8044 Zürich (CH); CARANOVIC, Stefan, 8302 Kloten (CH)

(57) **Abstract**

An actuator (100) for moving and securing an object (25) in a specific orientation is provided. The actuator (100) extends essentially along its longitudinal axis (AA^{/}), and includes a flexible structure (1) having multiple inflatable chambers (10a, 10b, 10c). In a pressurized state of the actuator (100), on account of the pressure difference created between the chambers (10), on or more of the chambers (10) inflate, and the flexible structure (1) bends at least along one axis perpendicular to the longitudinal axis (AA^{/}). A stiffening means (2) of the actuator is connected to the flexible structure (1) at least along two positions (6a, 6b, 6c) located at an offset to the longitudinal axis (AA^{/}). The stiffening means (2) provides bending stiffness to the actuator (100), firmly securing the actuator (100) in the specific orientation. A mechanism (140) secures and mechanically connects the actuator (100) to the object (25), and the object (25) may be a solar panel or a reflective plate. A solar energy harnessing apparatus (120) is further provided, including multiple such mechanisms (140) mounted over the façade (27) of a building (26), for trapping solar energy.

## Description

The invention is related to an actuator for moving and securing an object in a specific orientation; a mechanism comprising the actuator; a solar energy harnessing apparatus comprising a plurality of mechanisms, one or a plurality of buildings having a façade and being equipped with a solar energy harnessing apparatus; as well as a method for manufacturing the actuator.

Use of actuators/actuating mechanisms in robotics and mechatronics is quite predominant. By definition, actuators are mechanisms used for activating motion of devices or objects in a desired orientation, through the use of pneumatics, hydraulic or electric signals.

One category of actuators, based on their constituting material, includes soft-actuators, which are generally composed of a soft, deformable material, such as an elastomer. Soft-actuators work on the principle of the expansion or compression of their structure, owed to the flexible material they are formed of. Different types of rubber available today are used as elastomers for manufacturing soft-actuator. Further, different forms of motion along multiple degrees of freedom can be facilitated using soft-actuators, including bending, twisting, shrinking and elongation along their longitudinal axis. As compared to hard-material actuators, such as electromotors, hydraulic and pneumatic pistons, soft-material actuators are privileged with several advantages, such as robustness to minor agitations/disturbances and instant force shocks, low weight with relatively higher power to weight ratio, resilience to harsh weather conditions, design flexibility, and uncomplicated and economical fabrication process.

Often pneumatic actuators are used for complex handlings. These pneumatic actuators are devices that operate on being pressurized by a fluid, i.e. air, and these devices convert the energy of the compressed air into motion. The devices are generally mechanisms including multiple rigid links, connected through joints. Several achievements have been made in the robotics industry, aiming to continuously improve the design, flexibility and structural rigidity of robotic actuators. One use of actuators can be to facilitate movement of an object along multiple degrees of freedom, which is generally achieved by attaching and mechanically securing the object to the actuator, and then moving the actuator in a desired orientation by an electronic control unit coupled to the actuator. Specifically, an influx of compressed air in the pneumatic actuators facilitates movement of such an object along the desired orientation.

One category of actuators includes soft robotic structures/actuators, which are generally made of flexible materials, such as elastomers, to facilitate their bending along one or more axes. Another kind of actuators includes hard robots, which, due to their stiffness, have the capability of being precisely positioned and secured in a desired configuration.

Further known hybrid actuators are formed of a combination of a hard and a soft material, possessing both the virtues, i.e., design flexibility and structural rigidity are not known to the art.

Alongside, actuators composed of soft materials also exhibit certain disadvantages, such as lack of structural stability, the complexity involved in precisely positioning and securing them in a stabilized, desirable orientation, especially when such soft-actuators are under the influence of significant external forces, such as the impact of blowing wind. For such reason, at times, hard-material robots/actuators are preferable over the soft actuators.

The structural stability of an actuator is generally a function of its stiffness and damping characteristics. During the process of interaction of robots with objects, in unknown dynamic environment, for example, during human-robot interaction, grasping of fragile objects, and during agile locomotion, soft-material actuators should be ideally capable of adjusting their stiffness and damping characteristics, so that they adapt themselves effectively during such tasks. Some approaches towards stabilization and stiffening of soft-actuators still exist. One of those techniques is particle jamming, which involves blending the material of the actuator with smaller size materials, such as grain or sheets that are capable of changing from a flexible to a solid-state material. One work in that direction was published in the work of Vincent et al. IEEE paper titled "Selective stiffening of soft-actuators based on jamming". However, jamming generally requires an additional vacuum generation and distribution system, which leads to an increase in the intricacy of the system.

There is often a trade-off between structural flexibility and the structural rigidity, depending on whether soft-material or hard-material actuators are used for facilitating motion of objects. Perfect material combinations that form hybrid actuators equipped with both pliability and stabilization characteristics, are not yet known in the art.

State of the art solutions in the robotics industry lack in leveraging advantages of material combinations for actuators, which could exhibit both soft, flexible characteristics for facilitating bending of the actuator in a desired orientation, and the rigidity required for stabilizing and securing the actuator in place, after the object attached thereto has acquired the desired orientation.

Therefore, stabilization of soft-robots is yet an unvanquished challenge in the robotics industry. Further, soft material robotics is still a relatively new and developing field of technology, with continuous, on-going research occurring in the area.

One of the initial works in the domain of soft-actuators is incorporated by Shephard et al. in PCT Publication No. WO2015061444. The application discloses a soft robotic device and a method of fabrication thereof. The actuator includes one or more integrated, enclosed compartments, formed by rotational casting. Though the actuator can withstand a wider range of pressure loads before failure, means for securing and stabilizing and securing the actuator in the desired position or orientation is missing.

WIPO Publication No. WO2013148340 A2 further discloses design of another soft, flexible actuator formed having a flexible, molded body that includes multiple channels capable of expanding on being pressurized by a fluid. However, the application also fails to disclose means for securing and stabilizing the actuator in the desired position that could obtain additional stability.

Further attempts in the area of hybrid, soft-hard material actuators have been disclosed by Robinson, Davies and Webster et al. In their work, tensioning cables are used as stiffening and stabilizing means, which pull the top plate of the actuator towards the bottom plate. However, that approach is more complicated and suffers from the disadvantage that electromotors are required for pulling the tensioning cables. Additionally, that design is subjected to buckling under heavy load conditions.

None of the current solutions available in the art has, therefore, effectively addressed the problem of stabilization of soft-robots.

Considering the problem mentioned above, and other shortcomings in the art, there exists a need for a structure, characterized by both flexibility and pliability during the process of motion transfer to an object attached thereto, and its stability and rigidity after the object secured thereto has acquired the desired orientation.

According to an aspect of the invention, the disclosure provides an actuator for moving and securing an object in a specific orientation in two rotational degrees of freedom. The actuator extends essentially along a longitudinal axis thereof, and includes a flexible structure having multiple inflatable chambers. In a pressurized state of the actuator, a pressure difference is created between the different chambers, on account of which at least one of the chambers is an inflated state. This facilitates bending of the flexible structure of the actuator at least about one axis extending perpendicular to the longitudinal axis thereof. Further, the actuator includes stiffening means mechanically connected and secured to the flexible structure at least along two positions located at an offset to its longitudinal axis. The stiffening means provides additional bending stiffness to the actuator, and in combination with the pressurized flexible structure, firmly secures the actuator in the specific orientation.

In one embodiment, the plurality of inflatable chambers includes at least three chambers positioned essentially symmetrically about the longitudinal axis of the actuator.

Further, at least one among the plurality of chambers may include one or more rib structures provided on one more of an outer surface and an inner surface thereof.

Also, in at least one of the inflatable chambers, the wall or a section of the wall forming the chamber has a side facing the longitudinal axis and a non-facing side, wherein the non-facing side is thinner than the side facing the longitudinal axis.

In a further embodiment, the flexible structure includes a hollow interior portion, and at least one opening leading into the hollow interior portion, wherein the plurality of inflatable chambers circumferentially surround the hollow interior portion.

The actuator may comprise a top plate and a bottom plate each being mechanically secured to the flexible structure, wherein one of the top and the bottom plates is designed and adapted to receive the object directly on a surface thereof.

In that embodiment, the stiffening means may be pivotally connected to the top and bottom plates, through one or more hinge elements provided on the top and bottom plates.

The hinge elements may provide two mutually perpendicular axes of rotation for the actuator.

The mechanical connection of the stiffening means to the top and the bottom plates may be configured to constrain movement of the flexible structure along the longitudinal axis of the actuator.

In order to increase the stiffness, the stiffening means is formed of a material having stiffness greater than the stiffness of the flexible structure.

That is, the current disclosure provides a hybrid pneumatic actuator, formed as a combination of a hard and a soft material. The actuator is capable of bending at least along two different axes mutually perpendicular to each other. The actuator exhibits the ideal characteristics of both soft and hard robotics structures, and is characterized by its low weight, resilience to unfavorable weather conditions, such as under the influence of heavy wind, and is also structurally stable and can be precisely controlled for securing it in a desired orientation. Further advantages of the actuator include its design customizability, ease of fabrication, and low cost.

In accordance with another aspect, the disclosure provides a mechanism comprising the actuator as described above and an object mechanically connected and firmly secured to the actuator. The object can be a solar module for harnessing solar energy, or a reflective plate meant for at least partially reflecting the solar radiation incident thereon, in a desired direction.

According to another aspect, the disclosure sets forth a solar energy harnessing apparatus, including multiple mechanisms as mentioned above and a plurality of solar modules or reflective elements, wherein each solar module is individually, mechanically connected to a respective of the plurality of actuators.

According to yet another aspect, the disclosure discloses a building having a façade, the building being equipped with a solar energy harnessing apparatus as described above. The apparatus is mounted on the building's façade in a manner that it at least partially shields the building.

In accordance with another aspect, the disclosure provides an arrangement of multiple buildings, wherein the arrangement includes at least a first building as mentioned above, and a second building. The two buildings are positioned with respect to each other in such a manner that the rays reflected by the first building equipped with the solar energy harnessing apparatus, specifically sunrays, can be projected towards the second building.

In yet another embodiment, the disclosure sets forth a method of manufacturing an actuator in accordance with the invention, wherein the flexible structure of the actuator is manufactured by molding of an elastomeric material.

Additional aspects, advantages, features and objects of the present disclosure would be made apparent from the drawings illustrating embodiments of the invention and the detailed description of the illustrative embodiments construed in conjunction with the appended claims that follow.

### BRIEF DESCRIPTION OF THE DRAWINGS

Fig. 1 shows a three-dimensional view of a pneumatic actuator, in accordance with an embodiment of the disclosure;
Fig. 2a and 2b depict perspective view of a flexible structure of the pneumatic actuator of Fig. 1, shown bent in two different orientations;
Fig. 2c shows a sectional view of the flexible structure of Fig. 2, illustrating the different inflatable chambers of the flexible structure;
Fig. 3a is a chart depicting the pressure difference created between the different inflatable chambers of the flexible structure of the actuator of Fig. 1, as a function of the roll and pitch angles, in a pressurized state of the actuator;
Fig. 3b is a motion repeatability curve for the flexible structure of the actuator in accordance with the current disclosure, obtained from 50 inflation-deflation cycles for the actuator;
Fig. 3c is a graph depicting the experimental results conducted to verify the stiffness of the actuator during its pressurization, the graph specifically representing the angular displacement Vs external torque characteristics for different pressure values within the inflatable chambers of the actuator;
Fig. 3d depicts experimental results for damping effect on the actuator, representing the damping of the rolling angle for the actuator as a function of time;
Fig. 3e shows the quasi-static pressure-deflection measurements and quasi-static point extraction for the actuator in accordance with the disclosure;
Fig. 4a depicts a schematic feedback and orientation control system for a façade apparatus, mountable over a facade of a building system for harnessing solar energy, in accordance with an embodiment of the disclosure;
Fig. 4b depicts a schematic diagram of a pneumatic control system for a façade apparatus for harnessing solar energy, the apparatus comprising different actuators mounted over a façade of a building, in accordance with an embodiment of the present disclosure;
Fig. 5a shows the control performance of the pneumatic control system for a façade apparatus shown in Fig. 4b, using a single module of the façade apparatus, and following a zig- zag reference tracking algorithm;
Fig. 5b shows variation of the roll and pitch angles as a function of time, for a single module of the façade apparatus, during the control performance experiment for the façade apparatus of the present disclosure, conducted using the reference tracking algorithm;
Fig. 6a depicts the individual façade modules of a solar energy harnessing apparatus in accordance with the present disclosure, the modules being shown mounted over the façade of a building, on a summer day;
Fig. 6b depicts the individual façade modules of a solar energy harnessing apparatus in accordance with the present disclosure, shown mounted over the façade of a building in another orientation, on a winter day;
Fig. 6c depicts an arrangement of buildings, with a first building equipped with a set of reflective dynamic modules, and configured to reflect the sun ray at least partially towards a neighboring building, in accordance with another embodiment of the present disclosure;
Fig. 7 illustrates a mechanism for mounting the actuators of the present disclosure on the façade of a building, and for attaching an object to the mechanism, in accordance with the disclosure;
Fig. 8a depicts a three-dimensional view of a mold for manufacturing the actuators of the present disclosure; and
Fig. 8b depicts the different sequential stages involved during the process of manufacturing the actuator of the current disclosure, using a molding process.

The following detailed description illustrates aspects of the disclosure and the ways it can be implemented. However, the description does not define or limit the invention, such definition or limitation being solely contained in the claims appended thereto. Although the best mode of carrying out the invention has been disclosed, those in the art would recognize that other embodiments for carrying out or practicing the invention are also possible. Further, for the purpose of maintaining uniformity in the disclosure, wherever possible, like elements, components, structures or modules are denoted by like numerals in the drawings and the following description.

The term "flexible structure", wherever mentioned in the disclosure, means a structure that is pliable, i.e., has sufficient elasticity to be deformed or bent without fracture in a desired configuration.

The current invention proposes a pneumatic actuator, formed of a combination of a hard material structure and a flexible structure formed of a soft-material, and therefore, a hybrid pneumatic actuator, which is capable of rotating an object at least along two axes perpendicular to its longitudinal axis. Further, the invention also discloses a solar energy harnessing apparatus, or, equivalently, a dynamic façade apparatus, comprising multiple façade modules, i.e., the actuators, mounted over the façade of a building, with each actuator having an end attached to a solar panel for harnessing solar energy. Additionally, the invention further discloses a reflective façade apparatus, wherein, in an arrangement of buildings, multiple façade modules, i.e., the actuators, are mounted over the façade of a first building, with each façade module having a reflective plate or mirror attached to an end thereof, wherein such reflective plates or mirrors at partially reflect and direct the sun rays from the first building, to a second building neighboring the first building, for reducing the heat island effect. An undesirable portion of the irradiation, during a hot summer day, for example, may also be partially directed back to the sky.

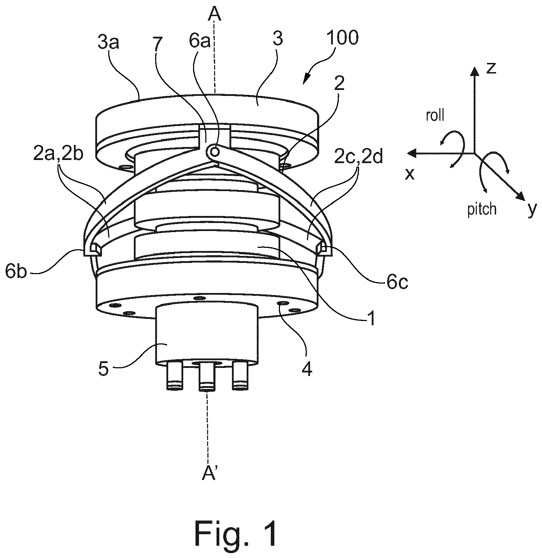

FIG. 1 illustrates an exemplary hybrid pneumatic actuator 100, in accordance with the disclosure. The currently depicted view is a three-dimensional perspective view of the actuator. A longitudinal axis A-A' of the actuator extends parallel to the z-axis of the Cartesian coordinate system depicted on the top right portion of the figure for reference. As is clear, the actuator extends longitudinally, generally parallel to its longitudinal axis A-A'.

The actuator includes an inner core formed of a flexible structure, generally denoted and indicated by numeral '1' herein and hereinafter. The flexible structure 1 is preferably made of a soft-material, such as an elastomer, and is capable of bending at least along two mutually perpendicular axes of rotation. Specifically, with respect to a Cartesian coordinate system shown on the top right portion of the figure, the flexible structure 1 can bend along the x- and y- axes, and therefore, can execute both pitching (about y-axis) and rolling motion (about x-axis). The structure, shape and components of the flexible structure will be explained in detail hereinafter, in conjunction with other figures to follow.

Two flat plates are attached to the top and the bottom portion of the actuator 100. A base plate, or equivalently, a bottom plate 4 is attached to the lower portion of the flexible structure 1. The base plate 4 has a generally circular form with a specific width, and it resembles the shape of a disc. However other shapes for the base plate 4 may also be contemplated, such as an oval, elliptical or an irregular shape. Preferably, the top and bottom surfaces of the base plate 4 have a flat, planar surface, so that ease of fixture and attachment of the plate to the bottom portion of the flexible structure 1 can be facilitated during the process of assembling the actuator 100.

Further, a top plate 3 is attached and secured to a top portion of the flexible structure 1. Similar to the base plate 4, the top plate 3 also preferably has a disc-shaped structure, with flat top and bottom surfaces. The top surface 3a of the plate 3 is designed and dimensioned to receive an object thereon. That object is securable to the top surface 3a through any of the appropriate attachment means known in art, such as nuts and bolt assemblies. In some embodiments, that object may also be adhered or bonded to the top surface 3a of the plate 3. In other embodiments, the object may be welded or soldered to the top plate 3 at certain portions. Therefore, as the flexible structure 1 bends along one or more of the x-and y-axes, the top plate 3 facilitates movement of the object attached thereto, in a desired orientation.

Stiffening means 2 surrounds and is mechanically connected and secured to the flexible structure 1. The stiffening means 2 is formed of a rigid material and thus, acts and functions as the rigid structural part of the hybrid actuator 100. In view of the combination of the flexible structure 1 and the stiffening means 2, the actuator 100 can be construed as a hybrid soft-hard robotic actuator, configured to impart both flexibility to the actuator during the process of bending, and structural rigidity and robustness during the state when the actuator 100 has acquired a desired orientation.

The stiffening means 2 is preferably a universal joint (U-joint), also generally known as a Cardan joint or Hooke's joint. A universal joint or a cardan joint generally couples two different shafts, and facilitates rotation of the shafts along two mutually angled axes of rotation. Similarly, the stiffening means 2, being mechanically secured to the flexible structure, facilitates bending of the flexible structure 1 along two mutually perpendicular axes, i.e., the x-and y-axes, as shown.

Integral components of the stiffening means 2 includes four arcuate members pivotally connected to the top and bottom plates 3 and 4 at suitable points. Specifically, in the currently depicted embodiment, a pair of arcuate bars 2a and 2b are shown on the left side of the flexible structure 1, and similarly, another pair of bars 2c and 2d is shown on the right side, also connected to the flexible structure.

Pivotal joints of the type indicated by numeral '6' are provided on the top and bottom plates 3 and 4, for connecting the arcuate bars 2a, 2b, 2c and 2d to the top and bottom plates. For example, as depicted, the left-side arcuate member 2a of the stiffening means 2 is pivotally connected to the top and the bottom plates 3 and 4 at pivot joints 6a and 6b, respectively. A hinge element 7 extending downwards is provided at a surface portion of the top plate 3. That hinge element is provided with a hole, where the pivot joint 6a is located. Screws or nuts-bolt assemblies may be used for enabling such pivotal connection. Further, for each of the arcuate bars 2a-d, one end thereof is pivoted to either of the top or the bottom plate 3 or 4, and the other end is pivoted to the other of the top and bottom plates.

Similar hinge elements 7 are provided at suitable surface portions of the bottom and top plates, for securing the arcuate bars 2a-d to the plates 3 and 4 at different pivot joints, such as the shown pivot joints 6b and 6c, located at an offset to the longitudinal axis of the actuator 100. Specifically, in the current embodiment, four pivot joints are provided altogether. Joint 6a being on the top plate 3, joints 6b and 6c being provided on the bottom plate 4, and joint 6d (not shown), being hidden in the current view and provided on the top plate 3. That hidden joint 6d pivotally connects the arcuate members 2b and 2c to the top plate 3, as can be visualized. As the actuator 100 is bent along one of the two mutually perpendicular axes (i.e., x- or y- axis), the chambers 10 extend slightly along the longitudinal axis A-A', and therefore, additional frictional forces are created at the hinge elements 7, which provide additional bending stiffness and therefore, stabilize the actuator 100 in the desired orientation.

As mentioned earlier, the arcuate bars 2a-2d each are rigid structures, and are each formed of a metallic material, or a metallic alloy. Suitable materials for arcuate bars may include aluminium, stainless steel or any other suitable metallic or metal & non-metal alloy, or any composite material.

In the currently depicted design of the actuator 100, the stiffening means is an outer U-joint, surrounding and wrapping around the flexible structure 1 and positioned in a manner located at a radial offset to the peripheral portion of the flexible structure 1. However, in alternative embodiments, the stiffening means 2 may also be an internal U-joint, located within the interior of the flexible structure 1. In those cases, similar pivot points may be provided at a suitable inner portion of the flexible structure 1 or at the top and bottom plates 3 and 4, and the stiffening means 2 may be fixedly secured to the flexible structure in an appropriate manner. Further, openings may be provided in the middle of such an internal U-joint, to allow passage of cables and facility lines, such as pneumatic tubes. Else, such openings for facility lines could also be alternatively provided within the interior of the flexible structure 1. Additionally, the openings may be through-openings, extending all through the longitudinal length of the actuator 100, and may have a circular, elliptical, oval or any other regular or irregular cross-section.

As a further alternative embodiment, instead of a single internal or external U-joint, as shown currently, some embodiments may also leverage a combination of multiple U-joints 2, with such joints being interconnected. Provision of such multiple joints may provide enhanced rigidity and a better motion performance for the actuator 100 by enlarging the available motion space. Particularly, motion of a system of chained U-joints may comply to, and follow the motion of the flexible structure 1 of the actuator 100 better.

Being firmly secured and mechanically connected to the flexible structure 1 in the manner depicted in Fig. 1, the stiffening means 2 provides rigidity and stiffness to the actuator 100 and secures it firmly in position, once the actuator 100 has moved to the desired orientation. An additional function of the stiffening means is to prevent longitudinal motion (i.e., translation) of the flexible structure 1 along the longitudinal axis AA'. Therefore, the expansion or contraction of the flexible structure 1 in direction parallel to the longitudinal axis is prevented, due to pivotal connections of the stiffening means to the top and bottom plates 3 and 4 at multiple points. Another advantage of the stiffening means 2 lies in that it also prevents the flexible structure 1 from rotating along the z-axis, i.e., preventing the structure from performing torsional movements about the longitudinal axis. Therefore, under the influence of unfavorable weather conditions, such as heavy winds, the actuator remains substantially stable and firmly secured in position, and therefore, any undesirable movement of the object attached thereto, can be avoided.

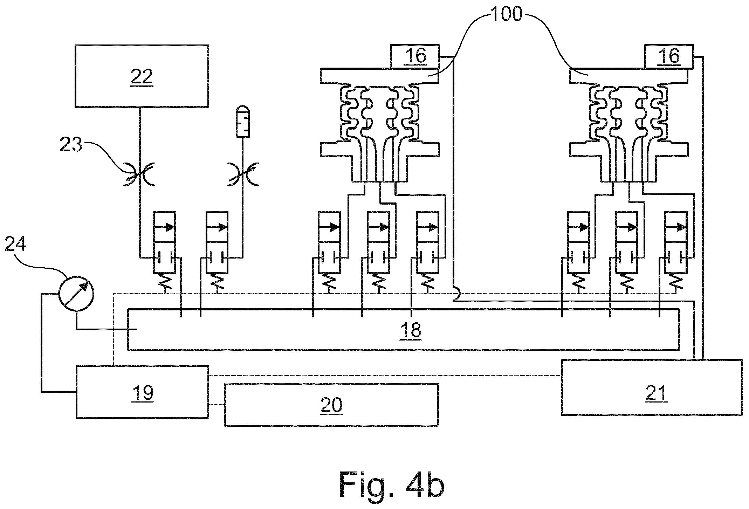

Connected to the bottom surface of the base plate 4 is a pneumatic connector 5. That connector has multiple plug-in points, which can be coupled to a pneumatic system (shown in Fig. 4(b)). The pneumatic connector activates the actuator 100, which is then pressurized by influx of air.

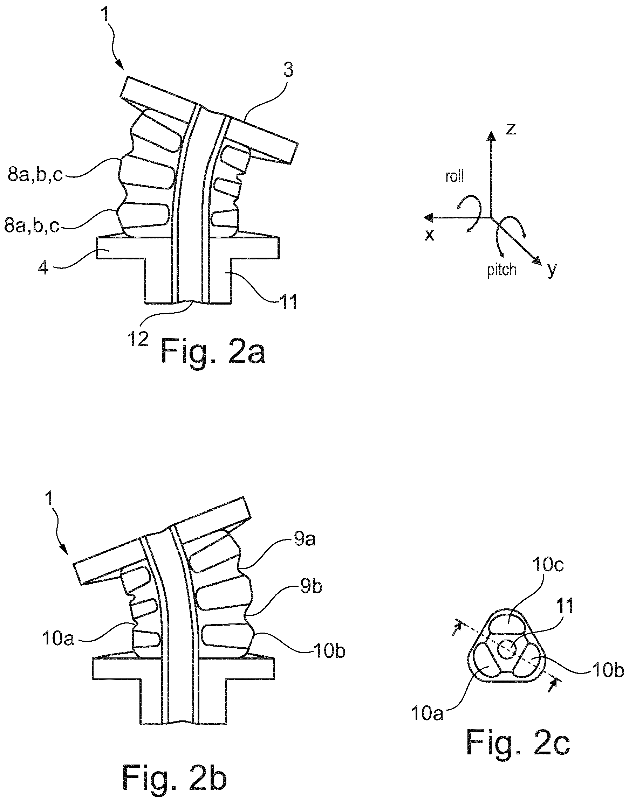

The structure and shape of the flexible structure 1 of the actuator 100 will now be explained in detail, in conjunction with Fig. 2a and Fig. 2b. Shown in Fig. 2a is the flexible structure 1 in a clockwise bent position about the y-axis (as viewed from the front). In other words, the structure 1 is executing pitching motion in the current state, being bent towards right, and performing rotation in a plane parallel to the x-z plane. Similarly, in the Fig. 2b, the flexible structure is bent anti-clockwise about the y-axis.

The flexible structure 1 includes three inflatable chambers 10a, 10b and 10c, as shown. As shown in Fig. 2b below, two inflatable chambers 10a and 10b exist on the left and right side of the flexible structure 1, and a third inflatable chamber 10c (hidden, and not shown herein) is formed at the back portion. The three chambers can be envisioned more easily in a top view of the flexible structure illustrated in Fig. 2c on the right side of the shown drawing.

A central core 11 extends longitudinally along the length of the flexible structure 1. That core 11 has a hollow interior portion 12 configured to receive and allow passage of electrical cables or facility lines through the flexible structure 1. To affect that, an opening at the bottom of the central core 11 leads into its hollow interior 12. The diameter of the central core 11 preferably lies between 10 and 15 mm. In alternative embodiments, wherein the dimensions of the actuator are scaled up, that diameter may be within a range of about 10-20 cm. Further, in other embodiments where the dimensions are scaled down, the reduced diameter can be also within a range of 1-2 mm. It can further be contemplated that other design parameters, such as the longitudinal length of the actuator and the wall thickness of its flexible structure would change accordingly in those embodiments........

Other design variations of the flexible structure may incorporate multiple cores of the type 11, each having a corresponding opening leading into a hollow interior of the type 12, to facilitate passage of facility lines through the cores. Such multiple cores may be centrally confined within the inflatable chambers, either symmetrically or asymmetrically around the longitudinal axis of the actuator.

As seen, the three inflatable chambers 10a, 10b and 10c are formed symmetrically around the longitudinal axis of the actuator 100, and are designed to circumferentially surround and completely encompass the central core 11. Further, the chambers 10 extend in a manner such that each of them preferably spans an equal angular extent around the longitudinal axis A-A' of the actuator 100. In the current embodiment, the three inflatable chambers, each extends spanning an angular range of 120° around the longitudinal axis. In certain less preferred embodiments, an asymmetrical configuration for the inflatable chambers 10 may also be contemplated, where they may extend in a manner having different angular range of circumferential extension around the central core 11. Those embodiments would be preferable, when bending of the flexible structure 1 along one direction or degree of freedom, for example, is more frequently utilized and preferred over the other degrees of freedom.

Each of the inflatable chambers 10a, 10b and 10c has an outer structure formed of an exterior wall and an interior wall. More specifically, the interior wall faces the longitudinal axis of the flexible structure 1, or equivalently, surrounds the central core 11, and the exterior wall forms a non-facing side with respect to the longitudinal axis, and therefore, is in contact with the outer environment. In some embodiments, the exterior wall of the chambers 10 is thinner than the interior wall. That characteristic of the chambers 10 facilitates a greater deformation, when they are in the pressurized state. Specifically, to pressurize one of the chambers 10a-c, air may be brought into that chamber, which creates a pressure difference and results in bending of the actuator in a direction towards other two deflated chambers. That bending effect is enhanced due to difference in thickness of the interior and exterior walls of the individual chambers 10a-c. During the bending of the flexible structure the ribs of the deflated chambers compress and bend towards each other until they touch, and similarly, the ribs of the inflated chamber expand and move radially outwards, to allow smooth bending of the flexible structure 1 along the x- or the y-axis.

Further, those in the art may contemplate other variations, such as a combination of more or less than three inflatable chambers encompassing the central core 11, and such variations are well within the scope of the present disclosure. For example, in some cases, only two inflatable chambers spanning an angular range of 180° each peripherally around the central 11 may suffice. Embodiments having a symmetrical arrangement of four inflatable chambers around the central core, with each chamber spanning an angular extent of 90° circumferentially around the central core 11 may also be contemplated.

Each inflatable chamber 10 has a ribbed structure provided on its outer surface. The ribbed structure specifically includes multiple inner ribs 9a, 9b (shown in Fig. 2 b) and outer ribs 8a, 8b, 8c (shown in Fig. 2 a). The inner and outer ribs are positioned alternately over the outer surface of the inflatable chambers 10a, 10b and 10c, in a manner juxtapositioned next to each other in a top-down envision of the chambers along the longitudinal axis. Owed to the ribbed structure, the flexible structure functions as a bellow, when pressurized by air.

The outer ribs 8a, 8b and 8c, each extend radially outwards from the longitudinal axis of the flexible structure 1, to a pre-determined length. Preferably, the outer ribs 8 have the same diameter as measured with respect to the longitudinal axis of the actuator 100, though non-uniform ribs with variable diameters may also be contemplated.

Inner ribs 9a and 9b (shown in Fig. 2b are formed between each pair of outer ribs 8. Specifically, as shown, an inner rib 9a is formed between the pair of outer ribs 8a and 8b, and similarly, another inner rib 9b is organized between the other corresponding pair of outer ribs 8b and 8c. Further, as is obvious, the radial, outward extension of the inner ribs 9 is smaller in comparison to that of the outer ribs 8. In a planar segment of the flexible structure 1, the inner ribs and outer ribs would appear as rectangular structures, located symmetrically about the longitudinal axis.

In some embodiments, instead of the inner ribs 9a, 9b, grooves may be provided between the adjacent pairs of outer ribs 8a, 8b and 8c, which may instead protrude radially inwards, towards the longitudinal axis of the actuator. A U-shaped form for such grooves may be generally preferable.

In some embodiments, the structure of the outer surface of the inflatable chambers 10 may also be simply planar, without any surface profile variations provided thereon. Mere difference in pressures between the individual chambers would still expand one of inflated chambers with respect to the other deflated chambers and, therefore, the functionality and purpose of the actuator would still be fulfilled. However, the ribbed structure is preferable, as it imparts additional deformation characteristics to the flexible structure 1.

Further, preferably the inner ribs 9a, 9b may have a thickness smaller than the thickness of the outer ribs 8a, 8b and 8c. This provides an additional deformation and bending capability to the flexible structure 1.

The ribbed structures, i.e., the inflatable chambers 10a-c of the pneumatically powered actuator 100 are made of an elastomeric material, such as Neoprene rubber, particularly Neoprene CR 5215. However, other suitable elastomeric materials may also be used for the chambers 10, such as Ecoflex 00-30, Vario 15/40, Elastosil M4601, etc.

Referring now back again to Fig. 1, the stiffening means 2, i.e., the Universal joint, enables modulation of the mechanical impedance of the actuator 100, by preventing its expansion along the z-axis, as mentioned earlier. When all the three inflatable chambers 10a-c are inflated, three antagonistically coupled moments are generated onto the U-joint, increasing the frictional force on the hinge elements 7. Due to that, the stiffness of the actuator 100 can be precisely controlled, and therefore, the flexible structure 1 can be stiffened when being in the desired orientation, which eventually behaves as a hard-actuator. More specifically, the securement and stabilization of the actuator is achieved by virtue of its hybrid structure, i.e., the combination of the flexible structure 1 and the stiffening means 2 it is composed of. As the pressure in all the three chambers of the flexible structure 1 is increased, bending moments generated within the chambers get instantaneously, antagonistically coupled to the stiffening means 2. This creates a state of stable equilibrium. Any external force acting on the top plate of the actuator pushes the actuator 100 off the stable orientation, and the antagonistic forces increase accordingly, opposing the tendency of the external force to disturb the state of equilibrium. As soon as the external force ceases to act, the antagonistic forces move the actuator 100 back to its equilibrium position.

In operative state of the actuator 100 (shown in Fig. 1), its motion along two different degrees of freedom, i.e., its capability to bend along two mutually perpendicular axes (x- and y-axis) will now be comprehensively explained. Normally, in an unpressurized, inoperative state of the actuator 100, the chambers 10a, 10b and 10c each remain deflated, and there is no air within their interior. In other words, the flexible structure 1 is in an upright position in the unpressurized state of the actuator, extending parallel to the longitudinal axis AA' of the actuator 100. In a pressurized state, however, air is directed towards one of the chambers 10a-c, which results in bending of the flexible structure 1. For example, directing air into the chamber 10a on the left side inflates that chamber, simultaneously deflating the other two chambers 10b and 10c, which results in a clock-wise bending (i.e., pitching) of the flexible structure about the y-axis (shown in Fig. 2a. To achieve a bending on the opposite side, in a plane parallel to the x-z plane, the chamber 10 b can be inflated, which results in bending of the chambers 10a and 10c, and allows anti-clockwise (as seen from the front) bending of the flexible structure 1 about the y-axis (as shown in Fig. 2b.

Similarly, for achieving rolling motion, i.e., bending about the x-axis, the chamber 10c at the back portion may be inflated.

For oblique bending, i.e., a combination of pitching and rolling motion, more than one of the chambers 10a-c may be simultaneously inflated, to achieve the desired motion of the actuator.

Suitable openings or inlets may be provided at a bottom portion of the inflatable chambers 10a-c for pressurization.

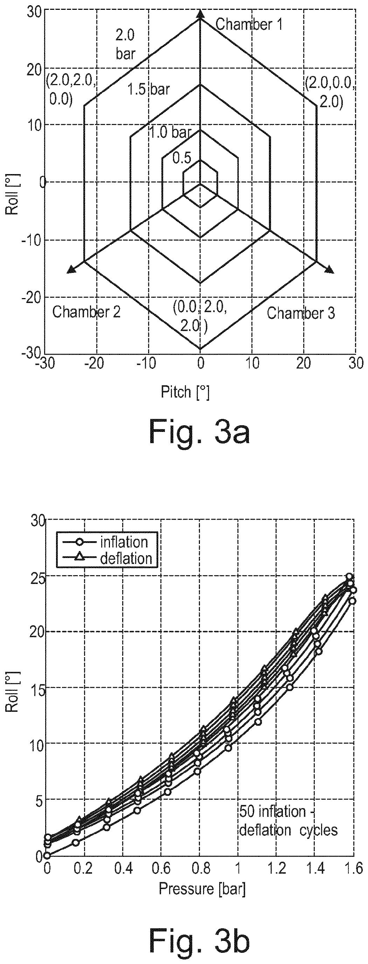

Fig. 3a to 3d show the experimentally obtained features and relevant data for the pneumatic soft-hard actuator 100. Shown in Fig. 3a is the actuator angle range in the roll pitch plane, i.e., the y-z and the x-z planes with respect to the Cartesian coordinate system depicted in Fig. 2. Specifically, the different directions of actuation and actuation paths at different pressure levels are shown here. Further, the variation of the rolling angle with respect to the pitch angle, at different pressure values within the individual chambers 10, is shown in the graph. The angular range of the hybrid actuator 100 is about 55° in vertical direction and 47° in vertical direction at a pressure of 2 bars. Experimentally, this pressure has been identified as being the maximum pressure under the influence of which the actuator can withstand a limited number of cycles before it breaks. Generally, the recommended pressure for an infinite lifetime (i.e., more than 30,000 cycles) is about 1.6 bar.

Fig. 3b depicts the results of motion repeatability performed on the actuator, for 50 inflation-deflation cycles. The chamber that lies on the bottom of the actuator, when the actuator is mounted on a façade module, i.e., the corresponding chamber 10c in Fig. 2b, is used for the current experiment. The variation in the rolling angle as a function of pressure is shown here, as that chamber is inflated or deflated. Further, the bottom curve corresponds to the inflation of the chambers, and the curve on top thereof corresponds to the deflation of the chamber. Further, pressure-deflection characteristics shown herein are obtained in a quasi-static inflation deflation process, where the angle measurements are taken after the flexible structure (i.e., the soft actuator) has reached its final expansion for a given pressure. Due to the ribbed structure of the soft-actuator, the pressure deflection characteristic is close to a linear variation. Additionally, during the expansion process, no hyper-extension regions for the elastomeric material of the chambers are reached, where hysteresis effect are generally prominent.

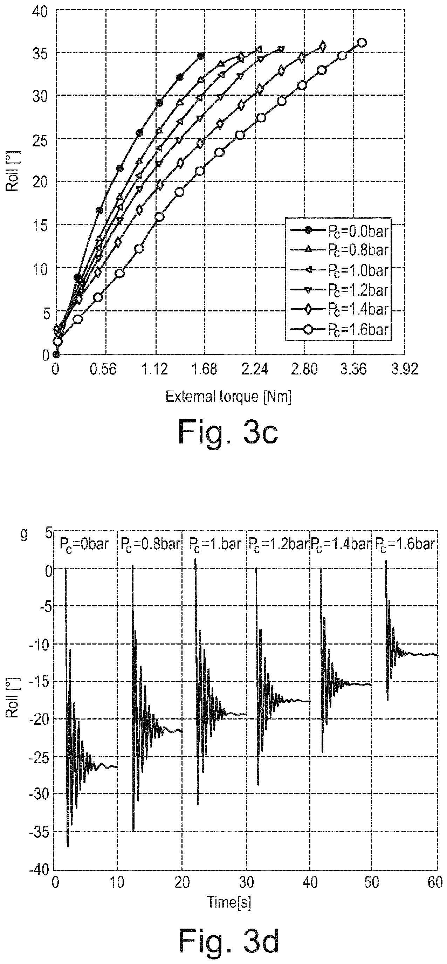

Figs. 3c and 3d depict the results of experiment conducted to verify the level of stiffness of the actuator 100. The experiment is carried out at five different values of pressure between 0 and 1.6 bars. Stiffness coefficient here is the ratio of the external rolling torque to the rolling angle. Shown in Fig. 3c specifically is the adjustable stiffness effect, i.e., the angular displacement (rolling angle) over external torque characteristics for the actuator at different pressure values. As the curves at difference pressure values have a decreasing slope, the stiffness, being the reciprocal of the curve's slope, increases as the pressure in all the three chambers increases. Further, the maximum stiffness value is obtained at the pressure of 1.6 bars. With this design and material of the actuator, that maximum stiffness of the actuator is 2.5 times its minimum stiffness at 0 bar pressure.

Fig. 3d shows the adjustable damping effect, obtained experimentally at similar, five different pressure values between 0 and 1.6 bars. The damping of rolling angle with time has been shown here.

The pressure deflection measurements for the hybrid actuator 100 have been further carried out experimentally. Due to the viscoelastic material that the flexible structure of the actuator is formed of, i.e., rubber, when being inflated to a certain pressure, the chambers 10 of the flexible structure 1 keep expanding for a certain time. Therefore, pressure-deflection measurements during the experiment were carried out in a quasi-static manner, i.e., angle measurements were taken continuously, after a certain steady state angle was achieved. Specifically, the experiment consisted of incrementally increasing the pressure within the actuator 100, to a certain maximum pressure, followed by step-wise deflating the actuator back to a 0 bar pressure. At each step, the pressure in the chambers was regulated to a reference value, using a developed bang-bang controller with a predefined pressure band. Further, an automatic testing procedure was developed, which needed user inputs in term of several factors, such as the pressure within the individual chambers, the number of steps desired, i.e., the incremental increase desired to reach the maximum pressure, and the duration for each step. The algorithm automatically performed the experimental procedure, and measured the pressure, the roll angle and the pitch angle at 20Hz rate. The whole pressure deflection experiment was repeated twice for each chamber, and cycled through each chamber of the flexible structure.

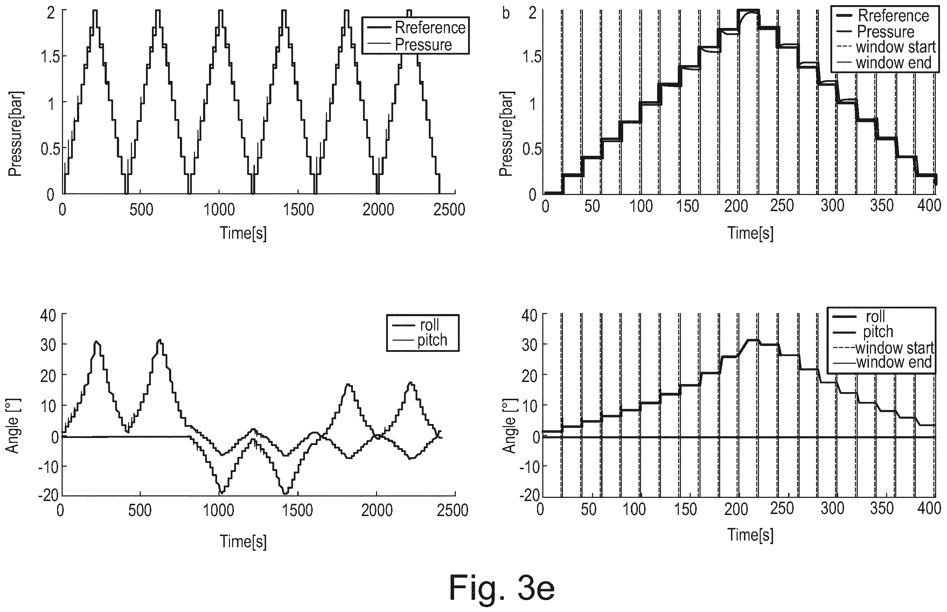

Quasi-static points were obtained, after obtaining the rolling and pitching measurements. For this purpose, an algorithm was developed in MatLab R2106b software, sampling the measurements on equidistant points in time. The timing parameters for the MatLab algorithm were manually entered based on the time values in LabVIEW. The results of the first six cycles of the pressure deflection experiment and a corresponding steady state data extraction is depicted in Fig. 3 (e).

The object to be mounted on the actuator 100, whose motion and orientation is desired to be controlled, can be either a solar module or a reflective plate or a mirror mounted over a façade of a building. Particularly, multiple such solar modules or reflective plates can be mounted over the façade of a building, forming a façade system, wherein each such solar modules or reflective plate can be connected to an actuator 100, for the purpose of controlling its orientation. Further, in some embodiments, more than one such solar module or reflective plate can be commonly coupled to, and controlled by a single actuator, reducing the requirement for the number of actuators.

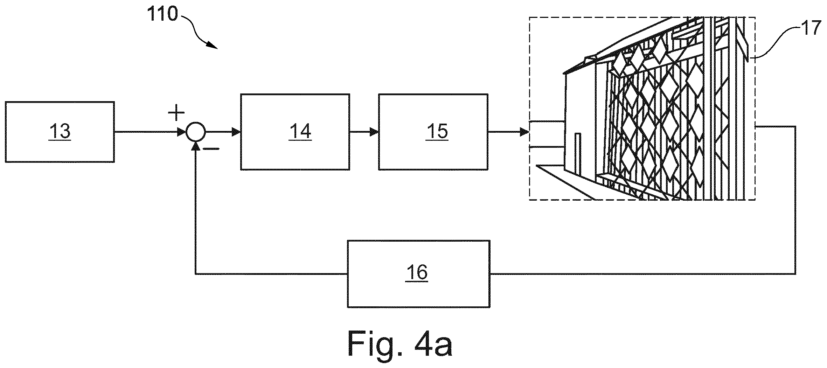

Methods for controlling such a dynamic modular building envelop, including the control feedback with respect to a reference, will now be explained in conjunction with Figs. 4a and 4b. Decomposition of the controlling operation includes two different tasks. The first task dictates a lower level control, which deals with the orientation control for the façade and its individual elements. The second task is a high-level control which considers the façade as a unitary system and deals with the energy and comfort related effects that the façade module can modulate based on the customized user requirements, along with the aim to harness maximum solar energy when the façade modules are solar panels. That control can be either directly linked to the building on which the façade system is mounted, or may also be at least partially linked to the neighboring building, in cases where the façade module are reflective plates.

Shown in Fig. 4a is a façade orientation control feedback system generally denoted by numeral 110. Façade modules 17 are shown being mounted over a building. Each such façade module is directly coupled to an orientation sensor 16, which may be an inertial measurement unit (IMU). The sensor 16 performs orientation measurements, defined by the roll and pitch angle for the corresponding actuators. A reference control 13 obtains an orientation feedback from the orientation sensors 16 and compares it with certain reference orientation control and orientation signals. The results of the comparison are then sent to a pneumatic control system shown in detail in Fig. 4b, which eventually controls the soft actuators. Numeral 14 represents a controller for the actuators, and is connected to a valve manifold 15 that controls the volumetric flow of air into the different chambers of the actuators.

Moving now to Fig. 4b it depicts a schematic diagram of the pneumatic control system for the dynamic solar module façade. Flow of air received from a pressurized air-supply source 22 first passes through an adjustable flow regulator 23 and is thereafter directed to a pressure distribution manifold 18. That manifold 18, being commonly connected to each of the actuators 100, distributes the air-flow line into multiple channels, each leading to the chambers of a specific actuator 100. Pressure sensor 24 continuously measures the air pressure within the distribution manifold 18 and the delivery lines. A real-time controller 19 is coupled to a graphical user interface 20, and 21 is a real-time microcontroller (µ-controller) having the necessary circuitry for motion control, including at least a microprocessor, an I/O circuit and a dedicated, stored program memory for storing control algorithms.

Desirable inputs from the user may be obtained through the graphical user interface 20, which may eventually be delivered to the real-time controller 19, for orienting the façade modules in the desired configuration. A simple user interface rendering multiple input options on a graphical interface may be used for obtaining user inputs. Such an interface may render selectable options, such as a fully extended opening or a complete closing of the solar modules of the façade, or selecting a specific angle of rotation within a displayed range of angular values, selecting one or both of the bending along the two axes of rotation, an auto-mode wherein the façade modules will automatically bend along an optimal inclination depending on irradiation, etc. More advanced user interfaces may also be integrated, where a user can address individual elements of the façade system, and therefore, control the inclination of individual, selected modules irrespective of the others. Further, the user interface may be provided as a touch panel mounted over a wall, or may also be provided on a smart hand-held device of the user, such as a smart-phone, iPad, a laptop, PDA, a local desktop computer or a tablet. Suitable wired or wireless networks and communication pathways may be used to couple such a device to the electronic control unit of the façade modules.

The roll-pitch plane for each actuator 100 is divided into three different regions, as shown earlier in Fig. 3a the regions being separated by the principal longitudinal axis of the actuator. Control algorithms stored within the memory of the micro-controller 21 are executed by one or more of its processors, to decide which among the chambers, and how many of them should be used and inflated, and to what pressure level, to move the attached solar modules or reflective plates in the desired orientation. Flow regulator valves 18 and the pressure distribution manifold 18 follow the command obtained from the controllers 19 and 21, i.e., the received pressure and flow control signals, and modulate the pressure in the different chambers of the actuators 100 accordingly.

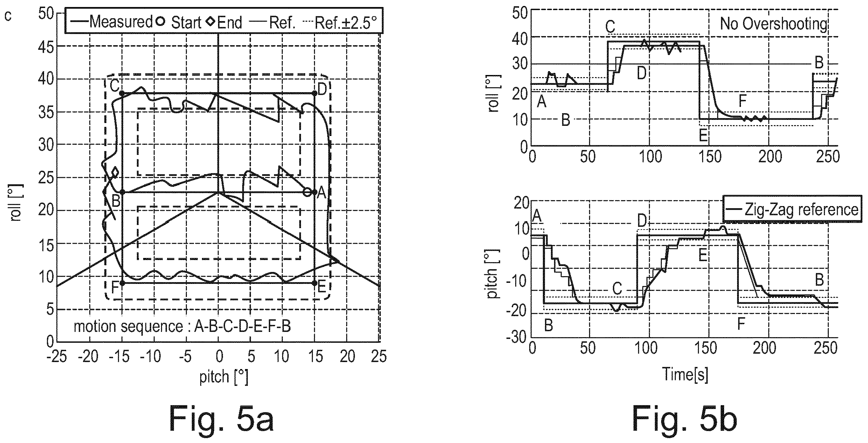

Fig. 5a depicts the control performance of a single actuator following zig-zag reference tracking algorithm resembling the shape of numeral '8'. The motion sequence A-B-C-D-E-F-B here shows variation in the rolling angle with the pitching angle at each stage of executing the 8-shaped curve. Further, the motion was controlled with a precision of about +/- 2.5 degrees.

When being in its operative state, the façade modules, i.e., the actuators, are substantially noiseless, with very low noise (about 30 Decibel intensity level) from the enclosed small electro-pneumatic valves integrated in the modules being audible from outside, when a listener is located proximal to the façade.

As a high-level control for the entire façade system, considering the envelop of solar modules or reflective plates attached to the actuators in conjunction with the building space behind the façade, the parameters of the building space and the building system play a crucial role in determining an optimal façade control strategy, which maximizes the energy efficiency of the building. An appropriate simulation framework is developed and utilized for minimizing the net energy demand of a building equipped with such façade modules. The framework incorporates and analyzes factors including the photo-voltaic generation, level and inclination of incident solar irradiation on the solar modules, and the building system performance, to finds an optimal angle for a given weather condition. Further, a real-time control algorithm can be coupled with the simulation model, which provides real-time weather conditions as an input to the model. The simulation can then adapt the optimal angle instantaneously in relation to any changes in the weather conditions, particularly the inclination of the sun rays diurnally. Therefore, feedback control of the façade modules incorporates weather changes as an integral parameter. Further, in comparison to a standard, static Building Integrated Photovoltaic System (BIPV), the current simulations have manifested about 20-80 % of net energy savings.

The pneumatic control system and control strategies for the façade modules were experimentally verified, wherein a real-time data acquisition programmable logic controller (PLC) compact RIO (cRIO) (by National Instruments) was developed and used to control a dynamic façade apparatus having 16 façade modules, integrated with thin-film photovoltaic cells (TFPV cells) mounted at the roof of a building. Specifically, the experimental sight was the HPZ Building at ETH Zurich Höggerberg Campus. The pneumatic control system was charged with an air compressor Vento-Silent OM200 with a 61 tank at 8 bar pressure. The pressure output of the compressor was reduced to 2 bars and fed over a 24 V 2/2-way electro-pneumatic on-off valve to a pressure distribution chamber. Along with an additional 2/2-way valve, used to release the pressure from the common chamber, an analog pressure sensor HSC-DANN030PGAA5 manufactured by the company Honeywell International Inc., having a range of 0-2 bars was attached to the pressure distribution chamber, and therefore, a basic pressure regulation system was obtained. The individual façade actuators 100 attached to each façade modules (i.e. the solar panels or the reflective plates) were then supplied with the pressure from this common pressure distribution chamber using additional 2/2 valves for each chamber. All the valves and pressure chambers were connected to the Programmable logic controller. Specifically, C-series modules 9476 with 32 relay outputs (from National instruments) were used to drive the 2/2-way valves. A fly wheel diode was connected in parallel to the valves, to protect the C-Series output modules.

The pneumatic system complexity was kept to the minimum to reduce the cost involved. Further, the system had a central organization due to the existence of the common pressure distribution manifold for all the valves. When a certain pressure level was established within the pressure distribution manifold, it could be easily distributed to one or more chambers at a time.

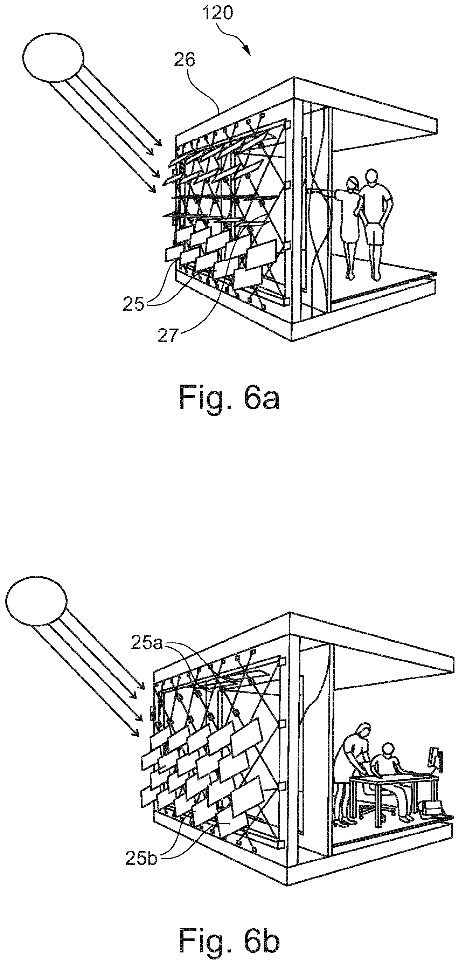

Fig. 6a depicts a solar energy harnessing apparatus 120, in a state mounted on the façade 27 of a compartment or room of a building 26, with the façade modules facing the sunlight. As shown, multiple objects 25, which are thin-film solar panels, particularly thin-film Copper Indium Gallium Selenide (CIGS) Photovoltaic panels, are mounted directly on the façade of the building, and are meant for trapping and harnessing solar energy and converting it into electrical power. Because of the relatively high absorption coefficient of the material of the CIGS PV panels, a generally thin-film is sufficient for trapping the solar irradiation. Those skilled in the art know that CIGS PV panels have a material formed as a solid solution of copper indium selenide (CIS) and copper gallium selenide (CGS), with their general chemical formula being CulnₓGa₍₁₋ₓ₎Se₂. The bandgap value of the semiconductor value varies with x, from 1 to about 1.7 eV. The solar panels 25 in the middle rows are well aligned to harness maximum irradiation and therefore, maximum the production of solar energy.

Fig. 6b depicts another arrangement of the solar energy harnessing apparatus during a winter day, where the façade modules on the top 25a are oriented in a substantially horizontal configuration, to let the sunlight enter into the compartment, while the bottom and the middle modules 25b are oriented in an operative state, for receiving the solar irradiation thereon. In this manner, both the objectives of user comfort (warmth inside the compartment) and solar energy harness may be achieved. Further, the individual solar panels 25 may be oriented in any other configuration deviating from those shown in Figs. 6a and 6b, based on user requirements.

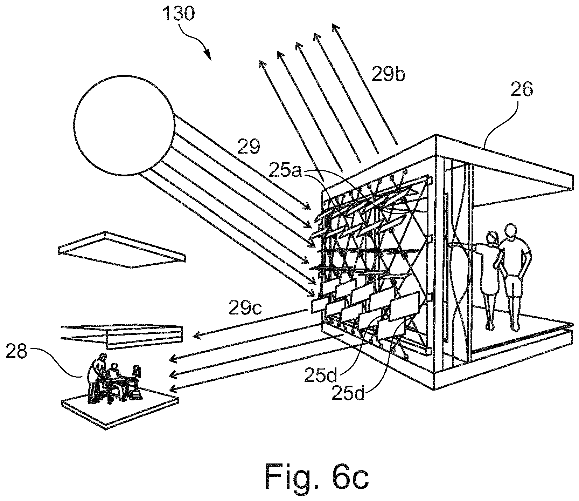

Fig. 6c depicts a system or an arrangement of buildings 130, including the first building 26, equipped with the solar energy harnessing apparatus depicted in Fig. 6a. A second building 28 is located in the near vicinity of the first building 26. Herein, the apparatus mounted on the first building 26's façade is a reflective façade apparatus, including multiple reflective plates 25a and the 25b mounted on the top and the bottom portion of the façade of the building 26, respectively. Particularly, the reflective plates 25a mounted on the upper portion are inclined in a manner to reflect the incident radiation back to sky as shown in form of reflected rays 29b. Concurrently, the lower reflective plates 25d are inclined in an orientation to reflect the incident sunrays 29 at least partially towards the neighboring building 28, as shown by the second set of reflected rays 29c. This embodiment and such an arrangement of the reflective plates 25 are particularly advantageous on a torrid summer climate, and may considerably minimize the heat island effect, and simultaneously be advantageous for neighboring buildings. Further, though only two such buildings 26 and 28 are shown in the current arrangement, alternative arrangements may include a number of such buildings being located in vicinity of each other, with the shown reflective façade modules being mounted on one or more of those buildings, with those reflective façade modules at least partially reflecting the incident sunrays to the sky, and redistributing the remaining incident irradiation to one or more other buildings in their vicinity.

Altogether, and generally, when utilized as a shading system, the façade apparatus shown above is well adapted to respond to the occupant requirement and his/her desirable comfort level. Multiple effects can be achieved using such a combination of façade modules, such as complete opening for a through-view to the exterior, entire closure for maintaining privacy within the compartment's interior, or, for example, a partial closure of the shielding system to avoid the sunlight from invading into the interior at least partially.

It was experimentally found that the two-axis hybrid actuator attached to the façade modules for controlling their orientation can significantly increase the level of collected PV electrical energy from 10 to 100 %, depending on the time of the day and the weather and geographical conditions. On an average, in a moderate climatic condition, the energy gains are found to be about 30 to 40 %. In an experiment conducted to verify the solar tracking performance of the solar energy harnessing apparatus, i.e., the façade modules, the power gained obtained by the hybrid actuators of the façade system was compared to 16 elements of two different cases of static Building-Integrated Photovoltaic Modules (BIPV) Modules. The first static BIPV façade had all its elements substantially parallel to the wall, or tilted by a maximum of 10 Degrees from the wall. The second static BIPV façade module had its individual elements tilted at about 45° to the wall. An angle of 45 Degrees is generally close to an optimal, average annual tilt. The experiment was carried out on a clear sky day, and the dynamic façade module was cycled through these three states during the day. Further, thin-film CIGS modules from the manufacturer Flison AG were laminated on an Aluminum sheet on 1 mm thickness and mounted on the top plate 3 of the flexible structure 1 of each hybrid actuator 100 (as shown I Fig. 1 earlier). Specifically, the façade apparatus was assembled on the roof of the HPZ Building at ETH Zurich Hönggerberg Campus. Further, several parameters were measured simultaneously to evaluate the efficiency of the system, such as the PV power output (at maximum power point), global horizontal irradiation, and the roll and pitch angle values for the individual actuators 100 attached to the façade modules. Specifically, two different solar tracking experiments were conducted, one with an update period of 5 minutes in the case of single façade modules of the apparatus, and second with an update of 10 minutes in the case of the entire façade apparatus. The façade apparatus was oriented 23° from the south towards the west direction. For a day in August in Zurich, the PV power gains from solar tracking were larger in the morning as compared to the afternoon. The façade apparatus started receiving and trapping the solar radiation at about 10:00 A.M. due to the shadow created by a neighboring building. Further, a self-shadowing was observed due to the other façade modules, when were therefore kept static between 10:00 and 11:00 A.M., when the incident irradiation angle on the façade was relatively high.

In the operative state of the solar energy harnessing apparatus, i.e., the façade apparatus, the shadowing between the individual modules appears, particularly at high incident angles of sun rays, which reduces the power gain of the apparatus. To eliminate that problem, instead of thin PV modules, concentrated multi-junction PV cells can be used positioned at the center of the top plate of each actuator 100, with a combination of a concentrating lens.

The long-term performance of the façade apparatus in real-time weather conditions was also experimentally verified, by keeping the modules at different orientations, such as at 0° to the wall, or tilted at about 45° from the wall. Further, factors such as the wind speed, humidity and the temperature were incorporated during the experiment. Wind was found to be the most influencing factor on the power output efficiency of the apparatus. Typically, the annual average wind speed in Zurich is about 11 km/h. Minor flickering of the façade modules was observed at such wind speeds. In extreme, unfavorable conditions, for example, storms with the wind speeds of about 70-80 Km/h may appear, which may substantially agitate the orientation of the façade modules. Under such conditions, the stabilizing mechanism for the actuator 100 of the façade apparatus can be activated, and the flexible structure 1 of each actuator 100 can be stiffened by increasing the pressure in all the inflatable chambers 10 (shown in Fig. 2) of the flexible structure 1 at the same time.

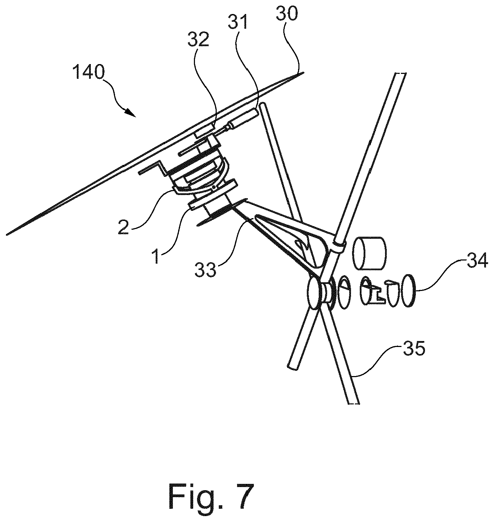

Fig. 7 illustrates an assembled state of a mechanism 140 for moving an object in a desired orientation, in accordance with an embodiment of the disclosure. The mechanism includes the actuator 100 as shown in Fig. 1 earlier with the object 30 mounted thereon, the object being mechanically connected to the actuator 100. The object 30, specifically, may either be a reflective plate or a mirror, or may be a solar panel (i.e., a thin-film CIGS PV panel). An orientation sensor 31 is connected to the object 30. That sensor continuously monitors the orientation of the object 30, in the operative state of the actuator.

Indicated by numeral 32 is a Photovoltaic junction box having a bypass diode, acting as an enclosure for accommodating electrical connections leading to the solar panels. The soft-structure of the actuator, i.e., the flexible structure 1, is positioned directly underneath the object 30. The universal joint, i.e., the stiffening means 2 surrounds and mechanically connected to the flexible structure 2. A cantilever beam 33 is secured to the actuator, preferably to the bottom plate of the flexible structure 1. Numeral 34 indicates a pneumatic control module for controlling the motion, i.e., bending of the object along two different axes, based on commands received from a user interface. Finally, tubes carrying services lines are indicated by numeral 35. Such service lines include the PV electrical cables, control cables and pneumatic tubes for pressurizing the actuator with air.

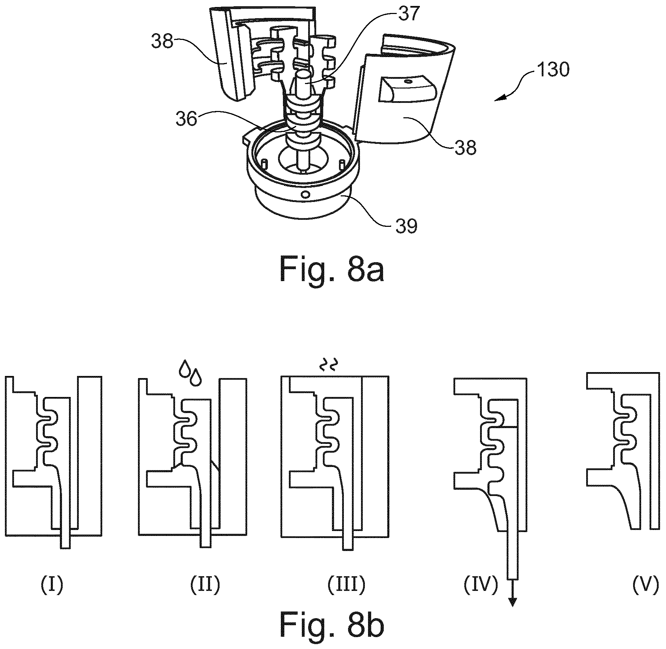

The method for manufacturing the flexible structure 1 of the actuator 100 will now be explained. The flexible structure, i.e., the soft portion of the actuator 100, is produced as a unitary structure in a quick fabrication process, which involves a single casting step. First, a mold consisting of several parts is designed and developed. A three-dimensional view of the mold 130 is shown in Fig. 8a. The design of the mold 130 can be formed using one of the commonly available CAD software, such as Rhinoceros 3D, Primavera, CATIA, etc. As shown, the mold 130 consists three chamber-shaped bullets 36, having a ribbed structure and meant for molding the inflatable chambers of the flexible structure 1. A central rod 37 is meant for producing the central opening, and two side portions 38 of the mold are meant to confine the molten material within the mold. A bottom piece 39 of the mold 130 is preferably formed of an aluminum plate, having holes for assembling the mold. A 3D laser sintering system is used to create the mold from Nylon plastic material. Further, no additional sealing components are required to be applied to the mold.

A sequential fabrication process for flexible structure 1 using injection molding is illustrated in different stages (i) to (v) shown in Fig. 8b below. The assembled mold in its sectional view is shown in stage (i). Stages (ii) & (iii) representing the step of pouring the molten elastomeric material into the mold. The mold is then degassed in a vacuum chamber and baked in an oven for approximately 45 min. at a temperature of about 70°C. Thereafter, the mold is cooled at the room temperature for about 15 minutes, and the outer pieces are then disassembled as shown in stage (iv). Only three bullets, representing the inflatable chambers of the flexible structure remain, as shown at the completion stage (v). Finally, a blast of compressed air is applied at the bottom inserts of the chambers, to release the solidified elastomeric material from the walls of the mold. The chamber-bullets can be, therefore, pulled out easily and a unitary body actuator is produced. Pneumatic fittings can then be, eventually glued to the actuator.

The fabrication process mentioned above is quick and innovative, drastically and reduces the fabrication time in comparison to the state-of-the-art fabrication processes. Additionally, the process exploits the hyper-elasticity and high elongation before breaking or fracture of hyper-elastic rubbers. Using the described process, a precise geometry and design of the inflatable chambers of the flexible structure can be obtained. Further, the fabrication process is compatible with elastomers lying within a wide range of viscosity, pot life and Young's modulus.

Though single-step casting process is described, multiple-step casting may also be contemplated in some embodiments, wherein the individual chambers and the central core can be formed using different molds, and may be eventually fused to each other to form the unitary structure. However, those embodiments are less preferable, as they would increase the fabrication time and cost involved.

In view of the different embodiments comprehensively described and illustrated herein, the solar energy harnessing apparatus, i.e., the façade apparatus, acts as a modular, dynamic and a light weight envelope for the façade of a building, with thin-film photovoltaic panels being attached to the actuator of the present invention. Further, the apparatus exhibits several advantages, such as the solar heat gain, daylighting, photo-voltaic energy generation, and occupant's comfort, controllable with an unprecedented spatial and temporal resolution. Further, when the apparatus is rather used as a reflective façade apparatus in an urban environment, the incident solar radiation can be redistributed to the neighboring areas or building, or may also be partially reflected to the sky, based on the user requirements. Further, apparatus has the potential for a fundamental shift from static building envelopes to a dynamic-adaptive skin/envelope for future nearly zero-emission buildings.

Although the current invention has been described comprehensively, in considerable details to cover the possible aspects and embodiments, those skilled in the art would recognize that other versions of the invention are also possible. Further, the illustrated embodiments of the invention, though exemplary, are not intended to define or limit the scope of the invention, such spirit and scope being completely contained within the claimed appended hereto.

### List of Reference Numerals:

- 100: Pneumatic Actuator
- 1: Flexible Structure
- 2: Stiffening Means
- 2a, 2b, 2c, 2d: Arcuate Members
- 3: Top Plate
- 3a: Top Surface of the Top plate 3
- 4: Base or Bottom Plate
- AA/: Longitudinal Axis
- 5: Pneumatic Connectors
- 6, 6a, 6b, 6c: Pivotal Joints
- 7: Hinge Element
- 8a, 8b, 8c: Outer Ribs
- 9a, 9b: Inner Ribs
- 10a, 10b, 10c: Inflatable Chambers
- 11: Central Core
- 12: Opening
- 110: Façade Orientation Control Feedback System
- 13: Reference Control
- 14: Controller
- 15: Valve Manifold
- 16: Orientation Sensor
- 17: Façade Modules/Elements
- 18: Pressure Distribution Manifold
- 19: Real-time Controller
- 20: Graphical User Interface
- 21: Microcontroller
- 22: Air-Supply Source
- 23: Adjustable Flow Regulator
- 24: Pressure Sensors
- 120: Solar Energy Harnessing Apparatus
- 25: Façade Modules/Objects
- 26: Building
- 27: Building Facade
- 130: Arrangement of Buildings
- 28: Second Building
- 25a & 25b: Reflective Plates
- 29: Sunrays
- 140: Mechanism for orienting the façade modules
- 30: Object
- 31: Orientation Sensor
- 32: Photovoltaic Junction Box
- 33: Cantilever Beam
- 34: Pneumatic Control Module
- 35: Electrical Cables
- 130: Mold
- 36: Bullets
- 37: Central Rod
- 38: Mold side portions
- 39: Mold's Bottom Piece

## Claims

1. An actuator (100) for moving and securing an object (25) in a specific orientation, the actuator (100) extending essentially along a longitudinal axis (AA') thereof and comprising: a flexible structure (1) having a plurality of inflatable chambers (10a, 10b, 10c), wherein, in a pressurized state of the actuator (100), on account of a pressure difference created between the chambers (10), at least one of the plurality of chambers (10) is in an inflated state, facilitating bending of the flexible structure (1) at least about one axis extending perpendicular to the longitudinal axis of the actuator; and a stiffening means (2) mechanically connected to the flexible structure at least along two positions located at an offset to the longitudinal axis of the actuator, the stiffening means (2) being configured to provide additional bending stiffness to the actuator (100) and to firmly secure the actuator (100) in the specific orientation.

2. The actuator (100) of claim 1, wherein the plurality of inflatable chambers (10) includes at least three chambers (10a, 10b, 10c) positioned essentially symmetrically about the longitudinal axis (AA') of the actuator.

3. The actuator (100) in accordance with one of the preceding claims, wherein at least one among the plurality of chambers (10) includes one or more rib structures (8, 9) provided on one more of an outer surface and an inner surface thereof.

4. The actuator of claim 1, wherein for at least one of the inflatable chambers (10), the wall or a section of the wall forming the chamber (10) has a side facing the longitudinal axis and a non-facing side, wherein the non-facing side is thinner than the side facing the longitudinal axis.

5. The actuator (100) in accordance with one of the preceding claims, wherein the flexible structure (1) includes a hollow interior portion (11), and at least one opening (12) leading into the hollow interior portion, wherein the plurality of inflatable chambers (10a, 10b, 10c) circumferentially surround the hollow interior portion (11).

6. The actuator in accordance with one of the preceding claims, further comprising a top plate (3) and a bottom plate (4) each being mechanically secured to the flexible structure (1), wherein one of the top and the bottom plates is designed and adapted to receive the object (25) directly on a surface thereof.

7. The actuator of claim 6, wherein the stiffening means is pivotally connected to the top and bottom plates (3 & 4), through one or more hinge elements (7) provided on the top and bottom plates.

8. The actuator of claim 7, wherein the hinge elements (7) provide two mutually perpendicular axes of rotation for the actuator.

9. The actuator in accordance with one of the claims 6 or 7, wherein the mechanical connection of the stiffening means (2) to the top and the bottom plates (3 & 4) is configured to constrain movement of the flexible structure (1) along the longitudinal axis (AA') of the actuator.

10. The actuator (100) in accordance with one of the preceding claims, wherein the stiffening means (2) is formed of a material having stiffness greater than the stiffness of the flexible structure.

11. A mechanism (140) comprising the actuator (100) in accordance with one of the preceding claims, and the object (25) being mechanically connected to the actuator (100), wherein the object (25) is one of a solar module or a reflective plate.

12. A solar energy harnessing apparatus (120), comprising a plurality of mechanisms (140) of claim 11, further comprising a plurality of solar modules (25), each solar module (25) being individually, mechanically connected to a respective of the plurality of actuators (100).

13. A building (26) having a façade (27), the building (26) being equipped with a solar energy harnessing apparatus (120) in accordance with claim 12, the apparatus (120) being mounted on the building's façade (27), in a manner that the apparatus (120) at least partially shields the building (26).

14. An arrangement (130) of a plurality of buildings (26, 28), comprising at least a first building (26) in accordance with claim 13, and a second building (28), wherein the first and the second buildings (26 & 28) are positioned with respect to each other in such a manner that the rays (29) reflected by the first building (26) equipped with the solar energy harnessing apparatus (120), specifically sun rays, can be projected towards the second building (28).

15. A method for manufacturing the actuator (100) in accordance with one of the claims 1 to 10, wherein the flexible structure (1) of the actuator (100) is manufactured by molding of an elastomeric material.
